# EUROPEAN PATENT APPLICATION

(11) **EP 4 755 632 A1**
(43) Date of publication of application: **10.06.2026**
(21) Application number: 25211440.0
(22) Date of filing: 27.10.2025
(51) Int. Cl.: B32B 37/00, B32B 27/10, B32B 37/02, B32B 37/08, B32B 37/12, B32B 37/14, B32B 37/15, B32B 39/00, B32B 27/32, B32B 37/24, B32B 38/04

(54) **A METHOD AND SYSTEM FOR MANUFACTURING A PACKAGING MATERIAL**

(30) Priority: 04.12.2024 EP 24217586
(71) Applicant: Tetra Laval Holdings & Finance S.A., 1009 Pully (CH)
(72) Inventor: PERSSON, Fredrik, 221 86 Lund (SE); BENKÖ, Gabor, 221 86 Lund (SE); BJÖRUP, Niclas, 221 86 Lund (SE)
(74) Representative: Tetra Pak Patent Attorneys

(57) **Abstract**

The present invention relates to a method for manufacturing a packaging material. The method comprises laminating (206) a bulk layer (20) comprising paper or paperboard or other cellulose-based material to a barrier substrate (30) coated with a protective coating (40).

## Description

### Technical Field

The invention relates to a method and system for manufacturing a packaging material comprising a barrier layer. The invention further relates to a packaging material, and to a liquid food packaging container comprising the packaging material.

### Background Art

Packaging material can be manufactured in many ways depending on the type of material being used. It is generally known that packaging material comprising different materials can be beneficial as it allows for combining the properties of more than one material thereby allowing fine tuning and optimization of various properties of the final packaging material. Such packaging material often comprises a bulk layer and a barrier substrate.

The bulk layer is typically providing mechanical strength and rigidity to a packaging container formed by the packaging material, and especially for liquid food packaging the bulk layer often comprises paper, paperboard or other cellulose-based materials.

The barrier substrate is typically used to protect the content of the packaging container and the barrier substrate can be formed from several different materials, often one or more metallic foils.

The bulk layer and the barrier substrate are laminated together, for example by polymer melt extrusion lamination, wet lamination or dispersion lamination, or a combination thereof. A protective coating is subsequently added to the barrier substrate on the open side intended to face the interior of a packaging container formed by the packaging material, i.e. the side that is not laminated to the bulk layer. The still open side of the bulk layer, i.e. the side that is not laminated to the barrier substrate, is provided with a décor print that may be covered by one or more exterior layers of polymer. Optionally, the décor print may be added to the bulk layer already when the barrier substrate is laminated to the bulk layer.

For modern packaging containers it is common to provide the packaging material, prior to forming and filling of the packaging containers, with geometries such as crease lines and pre-laminated holes or slits. The crease lines will assist in forming and folding of the packaging material, while the pre-laminated holes or slits will assist in opening of the packaging container either by forming straw holes or for allowing mounting of external opening devices, such as flip caps or screw caps etc.

These geometries are typically applied to the bulk layer prior to its lamination to the barrier substrate which means that the barrier substrate, as well as the protective coating applied after the lamination of barrier substrate and the bulk layer, will cover the geometries thereby ensuring the desired integrity of the packaging material.

During manufacturing of the packaging material described above, great care must be taken especially when laminating the bulk layer having the barrier substrate and the protective coating. The above-described geometries form irregularities, such as air entrapment between the protective coating layer and the barrier substrate. Thus, one of the purposes may be achieving relatively high surface area adhesion causing as less as possible air entrapment. However, in the prior art, that purpose may be not achieved completely or not with a high surface area adhesion as the claimed invention achieves.

Such optimization is a delicate task and may take a substantial amount of time. In modern high speed manufacturing plants, this may lead to a significant decrease in production output. Accordingly, there is a need for an improved method and system for manufacturing packaging material that is less critical in terms of processing parameter optimization.

### Summary

It is an object of the invention to overcome at least partly one or more of the above-identified limitations of the prior art. In particular, it is an object to provide a method and system for manufacturing a packaging material that has no air or less air entrapment between the barrier substrate and the protective coating compared to the prior art.

In another benefit, the requirement of using high pressure nip to avoid or decrease air entrapment while providing the protective coating to the barrier substrate is eliminated. Less shear in the lamination nip has been achieved.

In a further benefit, since the effect of the creasing on the air entrapment is eliminated or decreased, deeper creasing can be formed on the bulk layer to make the folding the packaging material facilitated. Additionally or alternatively, creasing from inside of the bulk layer that is facing the barrier substrate would be enabled due to avoided air entrapment between the barrier substrate and the protective coating by precoating.

**In** an additional advantage, the thickness of the protective coating may be decreased compared to the prior art due to eliminated or decreased effect of the geometries on the bulk layer, like crease and/or punched hole. A thinner protective coating may be formed because providing a uniform protective coating in the absence of creasing and holes is possible.

To solve these objects a method for manufacturing a packaging material is provided. The method comprises laminating a bulk layer comprising paper or paperboard or other cellulose-based material to a barrier substrate coated with a protective coating.

The method may further comprise providing the protective coating to the barrier substrate before the lamination step, in a continuous manner. Thus, a cheaper production can be achieved by avoiding usage of another facility/area, transportation and tuning before and/or during the lamination.

Additionally, to solve these objects, a system for manufacturing a packaging material is provided. The system comprises a bulk layer station configured to laminate a bulk layer comprising paper or paperboard or other cellulose-based material to a barrier substrate coated with a protective coating.

The system may further comprise a barrier station configured to provide the protective coating to the barrier substrate, in a continuous manner.

The method and system are advantageous in that less fine tuning of the process parameters will be required to ensure high surface adhesion of the protective coating to the barrier substrate. This is achieved by providing the protective coating to the barrier substrate when the barrier substrate is not yet attached to the bulk layer and therefore has a smoother surface without the irregularities from the geometries of the bulk layer, for instance as having air between the barrier substrate and the protective coating in and/or around crease line(s) provided on the bulk layer and/or on a hole area provided on the bulk layer. Especially, the smooth and planar surface of the barrier substrate improves adhesion of the protective coating to the barrier substrate and will therefore require less fine tuning of the process parameters. Having a smooth and planar surface may improve quality and or inspection check operations, for instance by visual control equipment, by avoiding unwanted visual impurities, for instance shiny and/or multi-directional light reflecting areas.

The method and system are further advantageous in that providing the protective coating to the barrier substrate at an early stage protects the barrier substrate from becoming damaged during the manufacturing process.

**In** one embodiment of the method and system, the protective coating is intended to face the interior of a packaging container formed by the packaging material as the most inner layer.

**In** one embodiment, the method further comprises providing the bulk layer with one or more holes and/or crease lines prior to laminating the bulk layer to the barrier substrate coated with the protective coating. Because of the mentioned advantages of the method, the holes and/or the crease lines can be made deeper, with more complex geometries, and/or more pronounced without negatively affecting adhesion between the barrier substrate and the protective coating compared to when the barrier substrate is first attached to the bulk layer and the protective coating is added afterwards.

The method may further comprise providing the barrier substrate with a layer of coating having barrier properties. The coating can for example be provided with an aqueous dispersion coating method, with a dispersion or solution of a composition capable of providing barrier to oxygen gas, water vapor and/or further migratory substances. Examples of such compositions are aqueous compositions comprising vinyl alcohol polymers or starch or other polysaccharides, optionally further comprising a filler or a laminar mineral compound, such as talcum or bentonite or other clay minerals. Alternatively, or also, the coating can be provided using a vapour deposition process such as chemical vapor deposition and/or physical vapor deposition and may in a preferred embodiment be metalized, i.e. deposition-coated with a merely nanometer thick coating of metal, such as aluminium. Providing a coating to the barrier substrate allows for the possibility to use an alternative non-metal material for the barrier substrate, such as paper sheet and/or polymer such as polyolefin, while still preserving the protective abilities and the barrier properties of the barrier substrate. Using a barrier substrate comprising at least one polymer such as polyolefin and/or at least one paper forms another preferred embodiment of the present disclosure. For these embodiments, the amount of metal, for instance Aluminium, in the packaging material can be reduced, making it more environmentally friendly (for instance increase recyclability) and reducing material costs. However, a barrier substrate coated with a fragile material, for instance Silicon oxide (SiOx) or Aluminium oxide (AlOx), making the method even more advantageous since the barrier substrate, particularly the fragile material, is protected by the protective coating from an early stage. Additionally, the importance of having no air between the barrier substrate, especially the paper-based barrier substrate, and the protective coating is that if moisture present is reaching the barrier substrate, the moisture may dissolve the barrier polymer (PVOH, EVOH or similar) layer that the fragile material layer (SiOx, AlOx od similar) is adhered to. By precoating the protective coating to the barrier substrate, it will be secured that the fragile material does not loosen/crumble. Otherwise, if moisture is present, the failure rate is so high.

**In** an embodiment, the protective coating is provided as at least one layer of a molten extruded polymer or as at least one layer of a molten co-extruded polymer. This allows for the use of reliable and cost-effective processes.

**In** an embodiment, laminating the bulk layer to the barrier substrate coated with the protective coating is performed by a wet adhesive dispersion lamination and/or by a molten extruded polymer. An advantage is that allows for the use of existing techniques, being both reliable and cost-effective, for providing coating or laminating.

**In** another embodiment, the method further comprises cooling the protective coating prior to laminating the bulk layer to the barrier substrate coated with the protective coating. Having a cooled protective coating improves solidification of the protective coating, thereby increasing adhesion of the bulk layer to the barrier substrate. The system may have a cooling device, accordingly, to cool the protective layer.

**In** an embodiment, the method may comprise providing one or more outside layers to the other side, the free side that is not laminated to the barrier substrate, of the bulk layer after laminating the bulk layer to the barrier substrate coated with the protective coating, wherein said one or more outside layers is intended to face the exterior of a packaging container formed by the packaging material.

Accordingly, the system may comprise an outside layer station configured to provide one or more outside layers to the other side of the bulk layer after laminating the bulk layer to the barrier substrate coated with the protective coating, wherein said one or more outside layers is intended to face the exterior of a packaging container formed by the packaging material as the most outer layer.

**In** an embodiment, the protective coating provided to the barrier substrate comprises one or more layers polyolefin, preferably one or more layers of metallocene polyethylene (mPE), polypropylene (PP), low-density polyethylene (LDPE), and/or high-density polyethylene (HDPE). This is advantageous since the materials provide a good protection and adhesion to the barrier substrate. An adhesive may also be used to laminate protective coating to the barrier substrate. The adhesive may be at least one of Ethylene Acrylic Acid (EAA), Poly(ethylene-co-methacrylic acid) (EMAA) and Maleic anhydride acid (MAH) or a combination of these.

In an embodiment, the manufacturing the packaging material is performed under the packaging material flow speed of 400-650 m/min, particularly 500-650 m/min, more particularly 550-650 m/min.

According to another aspect, a packaging material is provided. The packaging material is produced by the method according to the first aspect.

According to a further aspect, a liquid food packaging container is provided. The packaging container is at least partly formed by a packaging material being produced by the method according to the first aspect.

All stated embodiment of each aspect can be applied to another aspect as a possible embodiment. All embodiments can be combined in alternative ways, although not explicitly mentioned in this description, but if remain under the scope of below claims and their dependency combinations.

Still other objectives, features, aspects, and advantages of the invention will appear from the following detailed description as well as from the drawings.

### Brief Description of the Drawings

Embodiments of the invention will now be described, by way of example, with reference to the accompanying schematic drawings, in which:
Fig. 1 is a schematic side view of a machine for producing packaging containers for liquid food products from a laminated packaging material according to an embodiment.
Fig. 2A is a perspective view of a packaging container according to one example.
Fig. 2B is a perspective view of a packaging container according to another example.
Fig. 3 is a cross-sectional view of a packaging material according to one example.
Fig. 4 is a cross-sectional view of a packaging material according to one example.
Fig. 5 is a schematic view of a system for producing a packaging material according to an embodiment.
Fig. 6 is a schematic view of a system for producing a packaging material according to another embodiment.
Fig. 7 is a schematic view of a method for manufacturing a packaging material according to one example.

### Detailed description

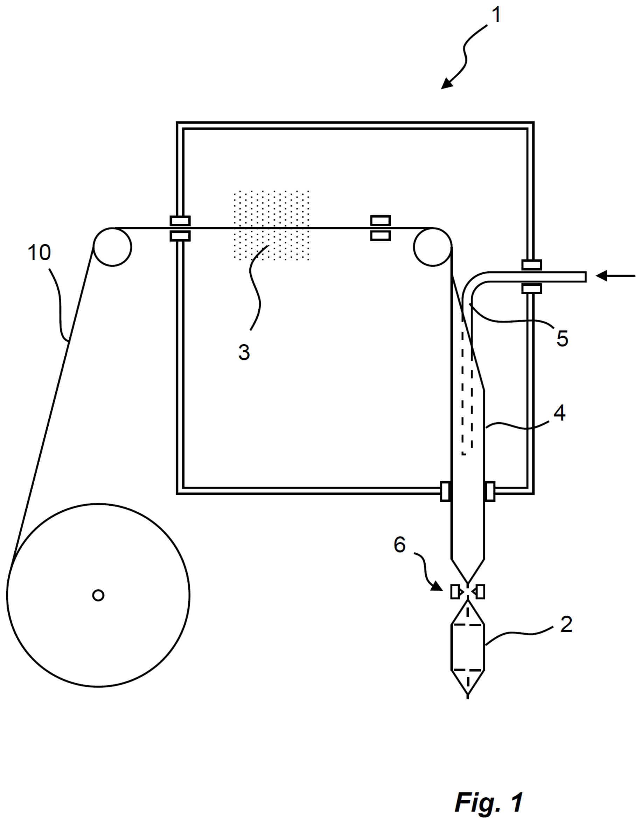

Starting in Fig. 1 an example of a machine 1 for producing packaging containers 2 from a laminated packaging material 10 is shown. The machine 1 comprises a sterilization section 3 configured to sterilize the laminated packaging material 10 normally being roll-fed into the machine 1. Downstream the sterilization section there is a tube-forming section 4 which seals the longitudinal ends of the laminated packaging material 10 to each other. A filling section 5 is configured to fill the longitudinal tube with the desired content, and a transversal sealing section 6 provides transversal seals and cuts to separate the packaging container 2 from the upstream tube of laminated packaging material 10.

It should be noted that while the machine 1 shown in Fig. 1 has proven to be very effective in producing individual packaging containers 2, generally the same packaging material 10 can be used for other machines operating according to different principles. For example, the packaging material 10 may be cut into separate blanks being fed into a machine which operates by folding and sealing tubular bodies having one closed end and one open end. After filling the tubular body, the open end is closed to form a sealed packaging container 2.

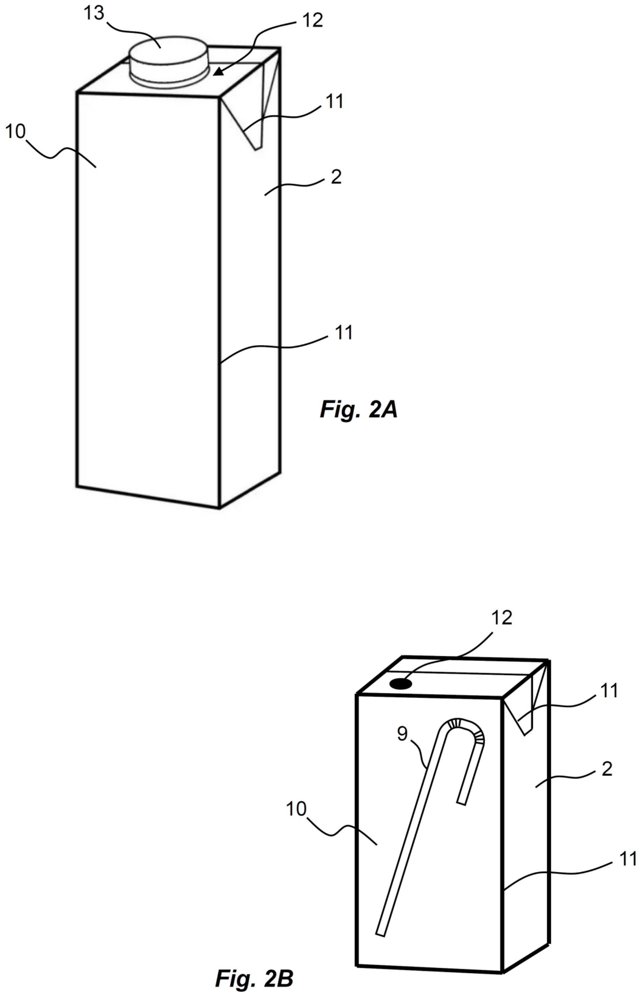

Examples of packaging containers 2 are shown in Figs. 2A and 2B. Each packaging container 2 is produced by folding, forming, and sealing a packaging material 10 as is well known in the art. To assist in folding and forming, the packaging material 10 has been provided with sets of crease lines 11. For improving usability by the consumer, each packaging container is also provided with an opening feature 12. The opening feature is here represented as an area of the packaging material 10 which is configured to be penetrated when opening the packaging container 2 to access the content. In Fig. 2A the opening feature 12 is formed by a laminated through hole in the packaging material 10, which is covered by a screw cap 13. When unscrewing the cap 13 for the first time, the opening feature 12 will be penetrated.

In Fig. 2B the opening feature 12 is also formed as a laminated through hole in the packaging material 10. The opening feature 12 is for this example fully exposed, such that a user may push a straw 9 through it.

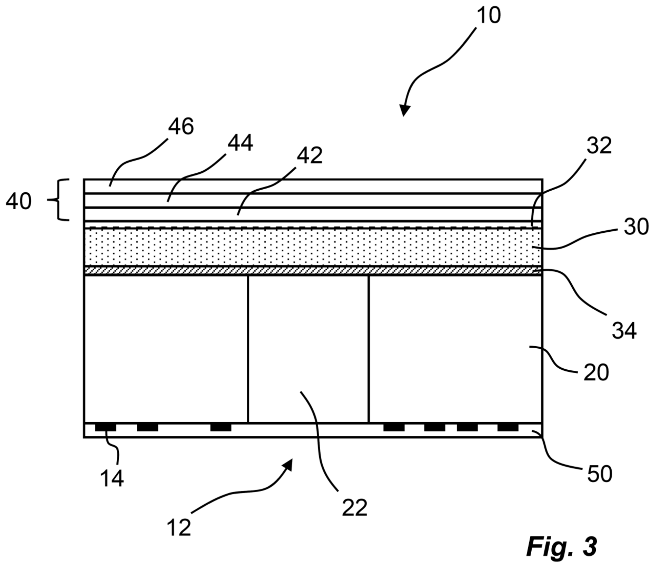

An example of a laminated packaging material 10 for use with e.g. the machine 1 shown in Fig. 1, and being suitable to form the packaging containers 2 shown in Figs. 2A and 2B, is described with reference to Fig. 3. The laminated packaging material 10 comprises a bulk layer 20 of paper or paperboard or other cellulose-based material, and a barrier substrate 30. Preferably, the barrier substrate 30 is provided with a metallic coating 32 on a side of the barrier substrate 30 facing away from the bulk layer 20. The barrier substrate 30 is arranged on one side of the bulk layer 20 by means of a thin lamination layer 34.

The barrier substrate 30 is provided with a protective coating 40, intended to face the interior of a packaging container 2. The protective coating 40 is preferably one or more polymer layers 42, 44, 46 as indicated in Fig. 3.

The opposite side of the bulk layer 20 is provided with one or more outside layers 50 intended to face the exterior of a packaging container 2 formed by the packaging material 10. The one or more outside layers 50 may further cover or carry a décor print 14. The outside layer may be low-density polyethylene.

In the example shown in Fig. 3, the bulk layer 20 is provided with at least one through hole 22. The through hole 22 may be punched or cut and it forms an opening feature 12 as has been described with reference to Figs. 2A and 2B. As the through hole 22 is entirely covered on the inside by the barrier substrate 30 and the protective coating 40, the content of the final packaging container 2 will be efficiently protected.

The area of the through hole 22 is consequently forming a pre-made opening structure, i.e. the opening feature 12, for allowing easy use of e.g. straws 9 or external opening devices 13.

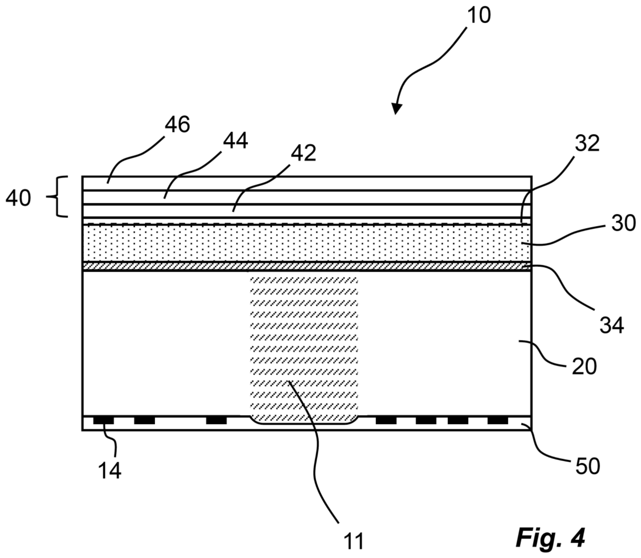

Another example of a packaging material 10 is shown in Fig. 4. Here, the various layers are identical to the structures shown in Fig. 3 and they will not be repeated here. The bulk layer 20 has no pre-laminated through hole 22 shown, but instead the bulk layer 20 is provided with at least one crease line 11. The crease line 11 forms a defect in the bulk layer 20 which forms a local reduction of robustness, thereby allowing the packaging material 10 to easily fold around the crease line 11.

The examples shown in Fig. 3 and in Fig. 4 are in practice normally (but not always) combined, such that the same packaging material 10 used to form a single packaging container 2 comprises at least one through hole 22 and one or more crease lines 11. It should be noted that the examples of Figs. 3 and 4 are not necessarily to scale, but the dimensions of the various layers may be varied depending on material choice and intended applications.

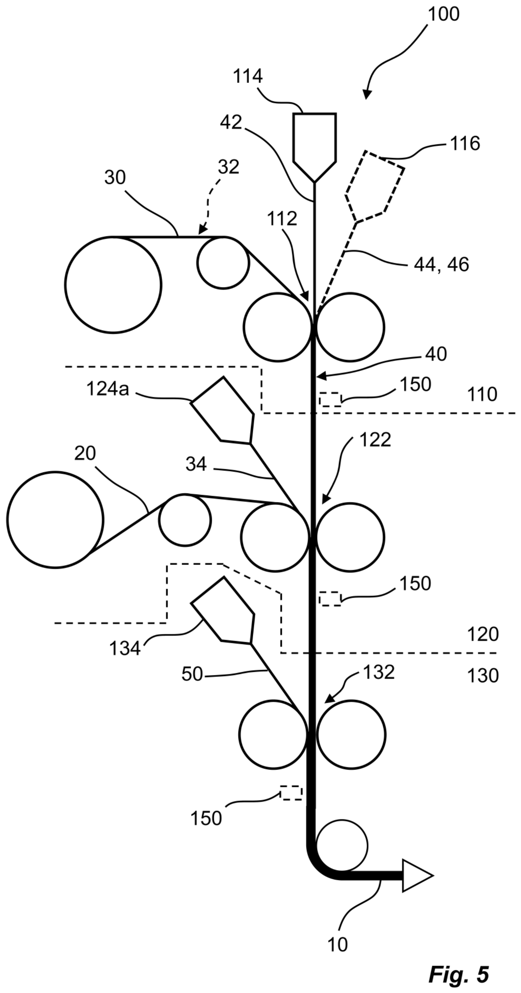

Now turning to Fig. 5 an example process is schematically illustrated using a system 100 for producing a packaging material 10. The aim of the system 100 is to provide an at least semi-finished laminated packaging material 10 from various input materials. In the shown example, the resulting product is a laminated packaging material 10 comprising a bulk layer 20, a barrier substrate 30, and a protective coating 40 to the barrier substrate 30. It should be noted that the system 100 is shown only as an example, and that various modifications and variations are possible. For example, the system 100 may be designed as a plurality of sub-systems, wherein the total operation of the sub-systems corresponds to the operation of the system 100.

The system comprises a barrier station 110, a bulk layer station 120, and an outside layer station 130. The output of the barrier station 110 forms input to the bulk layer station 120, which output in turn forms input to the outside layer station 130.

At the barrier station 110, a barrier substrate 30 is provided with a protective coating 40. The barrier substrate 30 may be a single material substrate, or it may be a barrier substrate 30 being pre-coated with a thin layer of coating 32 e.g. SiOx, AlOx and/or a metal, for instance Aluminium.

Different materials for the barrier substrate 30 may be considered. There is a list of materials that have proven particularly useful for being environmentally sustainable materials as well as capable of providing the desired barrier properties. Such useful materials include ethylene vinyl-alcohol copolymers (EVOH), polyethylene vinyl-alcohol copolymers (PVOH), nanocrystalline cellulose (NCC), micro fibrillated cellulose (MFC) or a fibre or paper-based material such as paperboard, or other cellulose-based material.

Suitable materials for preventing oxygen and/or water vapor transmission may be applied by vapor deposition coating, such as by physical vapor deposition, PVD, or chemical vapor deposition, CVD, especially plasma enhanced chemical vapor deposition, PECVD, thus forming the coating 32 (see Figs. 3 and 4) to the barrier substrate 30. Examples of such vapor deposited barrier coatings in the nanometre thickness range may be coatings, such as aluminium, oxide coatings, such as AlOx or SiOx, or coatings of amorphous carbon, i.e. amorphous diamond-like carbon coatings, DLC.

Other suitable materials for preventing oxygen and/or water vapor transmission may be applied by means of aqueous dispersion or solution coating of barrier polymers or barrier compositions of a polymer binder and inorganic particles or fillers. In some cases, polymers and compositions that are suitable for preventing oxygen transmission are also suitable for preventing migration of mineral oil contaminants.

The barrier substrate 30, optionally provided with a coating 32, is preferably roll-fed into a nip 112. Lamination of the protective coating 40 to the barrier substrate 30 may be performed using an extrusion device 114, which is configured to provide a molten film or "curtain" of polymer to the intended inside of the barrier substrate 30, preferably at the area of the nip 112, which presses the extruded polymer 42 onto the barrier substrate 30. Preferably, the extruded polymer 42 is arranged directly onto the coating 32 of the barrier substrate 30 which means that for the final packaging material 10, the coating 32 of the barrier substrate 30 is facing inwards.

The protective coating 40 may, as has been previously explained with reference to Figs. 3 and 4, be formed by one or more polymer layers 42, 44, 46. In the shown example of Fig. 5 a single extrusion device 114 provides a first polymer layer 42 of extruded polymer onto the barrier substrate 30. As indicated by the dashed lines, one or more additional extrusion device 116 may also be provided to add additional polymer layers 44, 46 to the protective coating 40. The one or more additional extrusion devices 116 may be arranged in series or in parallel (for instance coextrusion) with the first extrusion device 114.

Each extrusion device 114, 116 may be configured to provide a film of molten polymer, for example a film of polyethylene such as low-density polyethylene. Other materials suitable for forming a protective coating of the barrier substrate 30 may of course also be possible, in particular HDPE and/or mPE.

At the bulk layer station 120, the bulk layer 20 is laminated to the output of the barrier station 110, i.e. to the inside coated barrier substrate 30. The bulk layer 20, comprising paper or paperboard or other cellulose-based material, is preferably roll-fed and laminated at a nip 122 to the inside coated barrier substrate 30. Lamination of the bulk layer 20 to the output of the barrier station 110 may be performed using an extrusion device 124a, configured to provide a film of molten polymer, for example a film of polyethylene such as low-density polyethylene to the nip 122 as a lamination layer 34.

At the outside layer station 130 one or more outside layers 50 are provided to the exterior side of the bulk layer 20, i.e. the side intended to form the outside of the final packaging container 2. The one or more outside layers 50 are preferably laminated to the bulk layer 20 at a nip 132, receiving the one or more outside layers 50 as a film of molten polymer, from an extrusion device 134. An at least semi-finished laminated packaging material 10 is obtained after passing the outside layer station 130.

It should be noted that the system 100 may be provided with one or more cooling devices 150 arranged to cool the extruded polymer layers 42, 44, 46, 34, 50 after lamination. Such cooling devices 150 may e.g. be formed by one or more cooling rollers along which the semi-finished packaging material is running.

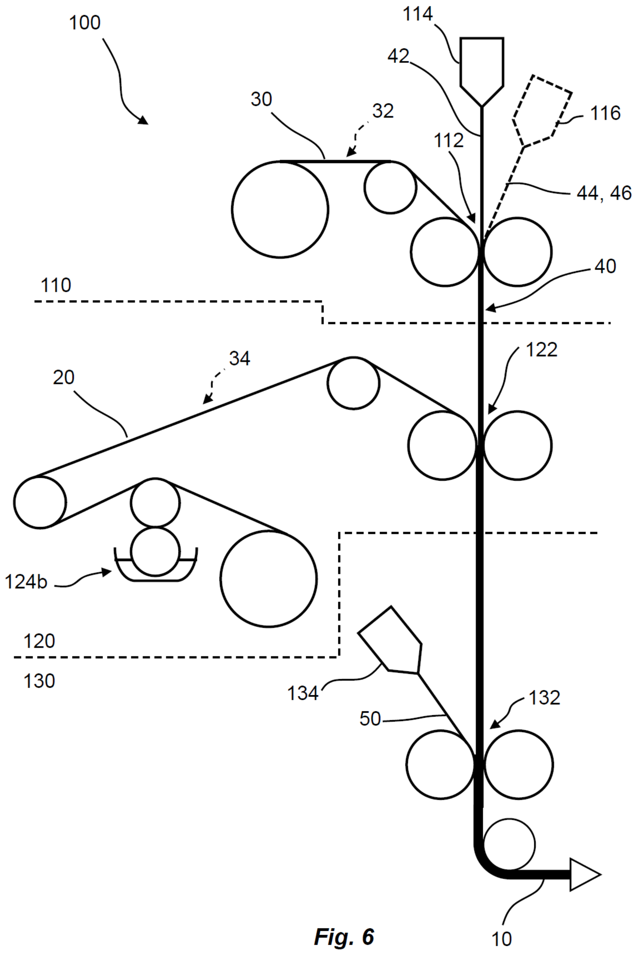

Another system 100 for producing a packaging material 10 is shown in Fig. 6. The system of Fig. 6 is identical to the system 100 shown in Fig. 5 with regards to the barrier station 110 and the outside layer station 130. Hence, these stations will not be described again.

For the bulk layer station 120, instead of laminating the bulk layer 20 to the barrier substrate 30 using extrusion lamination, a wet lamination device 124b applies a liquid, preferably aqueous, adhesive to one side of the bulk layer 20, i.e. to the side intended to face barrier substrate 30. The liquid adhesive will form the lamination layer 34 in between the bulk layer 20 and the barrier substrate 30 once these meet at the nip 122.

Alternatively, and not shown, the wet lamination device 124b is arranged such that the liquid adhesive is applied to the exterior side of the barrier substrate 30 rather than on to the bulk layer 20.

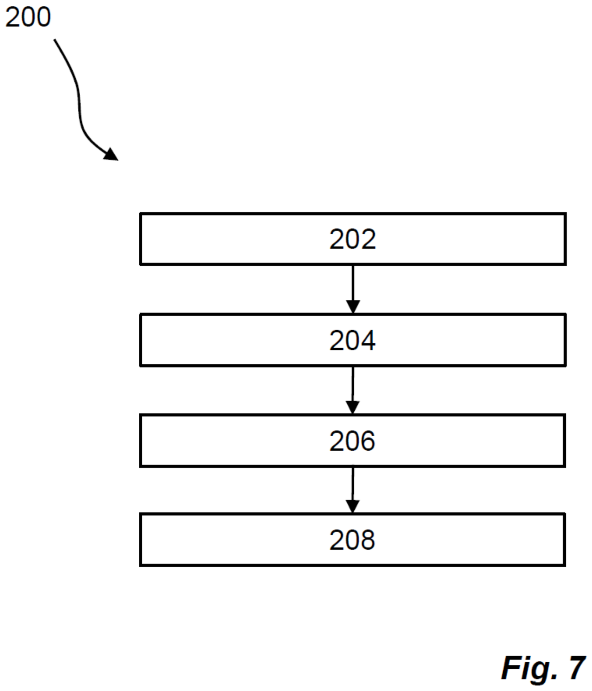

Now turning to Fig. 7, a schematic view of a method 200 for manufacturing a packaging material 10 according to one example is shown.

At an initial step 202 a barrier substrate 30 is provided. The barrier substrate 30 may be a single material substrate, or a substrate being provided with a coating 32 on an inner side.

In a step 204, a protective coating 40 is provided to the barrier substrate 30. The protective coating 40 may be formed by one or more layers of a polymer material.

At a step 206 the bulk layer 20 is laminated to the barrier substrate 30 coated with the protective coating 40. The bulk layer 20 comprises e.g. paper or paperboard or other cellulose-based material. Preferably, the bulk layer 20 is provided with one or more crease lines 11 and/or one or more through holes 22 prior to step 206. Further, the bulk layer 20 may at this point be provided with a décor print 14, or the décor print may be provided after step 206. The bulk layer 20 may be laminated to the barrier substrate 30 coated with the protective coating 40 by using a wet adhesive dispersion laminate or by using a molten polymer.

At a step 208, the other side of the bulk layer 20 is provided with one or more outside layers 50, forming the exterior side of the packaging material 10.

From the description above follows that, although various embodiments of the invention have been described and shown, the invention is not restricted thereto, but may also be embodied in other ways within the scope of the subject-matter defined in the following claims.

### List of references:

- 1: Machine
- 2: Packaging container
- 3: Sterilization section
- 4: Tube-forming section
- 5: Filling section
- 6: Transversal sealing section
- 9: Straw
- 10: Packaging material
- 11: Crease line
- 12: Opening feature
- 13: Screw cap
- 14: Décor print
- 20: Bulk layer
- 22: Hole
- 30: Barrier substrate
- 32: Coating
- 34: Lamination layer
- 40: Protective coating
- 42: Polymer layer
- 44: Polymer layer
- 46: Polymer layer
- 50: Outside layer
- 100: System
- 110: Barrier station
- 112: Nip
- 114: Extrusion device
- 120: Bulk layer station
- 122: Nip
- 124a: Extrusion device
- 124b: Wet lamination device
- 130: Outside layer station
- 132: Nip
- 134: Extrusion device
- 150: Cooling device
- 200: Method
- 202: Providing barrier substrate
- 204: Providing protective coating
- 206: Laminating bulk layer
- 208: Providing outside layer

## Claims

1. A method (200) for manufacturing a packaging material (10), comprising laminating (206) a bulk layer (20) comprising paper or paperboard or other cellulose-based material to a barrier substrate (30) coated with a protective coating (40).

2. The method (200) according to claim 1, further comprising providing (204) the protective coating (40) to the barrier substrate (30) before the lamination step, in a continuous manner.

3. The method (200) according to claim 2, further comprising cooling the protective coating (40) prior to laminating the bulk layer (20) to the barrier substrate (30) coated with the protective coating (40).

4. The method (200) according to any of the preceding claims, wherein said protective coating (40) is intended to face the interior of a packaging container (2) formed by the packaging material (10) as the most inner layer.

5. The method (200) according to any of the preceding claims, further comprising providing the bulk layer (20) with one or more holes (22) prior to laminating the bulk layer (20) to the barrier substrate (30) coated with the protective coating (40).

6. The method (200) according to any of the preceding claims, further comprising providing the bulk layer (20) with one or more crease lines (11) prior to laminating the bulk layer (20) to the barrier substrate (30) coated with the protective coating (40).

7. The method (200) according to any of the preceding claims, further comprising providing the barrier substrate (30) with a barrier coating (32) prior to providing (204) the protective coating (40) to the barrier substrate (30).

8. The method (200) according to claim 7, wherein the barrier coating (32) is intended to face the interior of a packaging container (2) formed by the packaging material (10).

9. The method (200) according to claim 7, wherein the barrier coating (32) is intended to face the exterior of a packaging container (2) formed by the packaging material (10).

10. The method (200) according to any of the preceding claims, wherein the barrier substrate (30) comprises at least one polymer.

11. The method (200) according to any of the preceding claims, wherein the barrier substrate (30) comprises at least one paper.

12. The method (200) according to any of the preceding claims, further comprising providing the protective coating (40) as at least one layer of a molten extruded polymer.

13. The method (200) according to any of the preceding claims, wherein laminating the bulk layer (20) to the barrier substrate (30) coated with the protective coating (40) is performed using a wet adhesive dispersion lamination.

14. The method (200) according to any of the preceding claims, wherein laminating the bulk layer (20) to the barrier substrate (30) coated with the protective coating (40) comprises using a molten extruded polymer.

15. The (200) method according to any of the preceding claims, wherein the protective coating (40) comprises one or more layers of mPE, LDPE, and/or HDPE.

16. The (200) method according to any of the preceding claims, further comprising providing (208) one or more outside layers (50) to the other side of the bulk layer (20) after laminating the bulk layer (20) to the barrier substrate (30) coated with the protective coating (40), wherein said one or more outside layers (50) is intended to face the exterior of a packaging container (2) formed by the packaging material (10).

17. A system (100) for manufacturing a packaging material (10), wherein the system (100) comprises a bulk layer station (120) configured to laminate a bulk layer (20) comprising paper or paperboard or other cellulose-based material to a barrier substrate (30) coated with a protective coating (40).

18. The system (100) according to claim 17, further comprises a barrier station (110) configured to provide the protective coating (40) to the barrier substrate (30), in a continuous manner.

19. The system (100) according to claim 17 or 18, wherein said protective coating (40) is intended to face the interior of a packaging container (2) formed by the packaging material (10) as the most inner layer.

20. The system (100) according to anyone of the claims 16-19, further comprises an outside layer station (130) configured to provide one or more outside layers (50) to the other side of the bulk layer (20) after laminating the bulk layer (20) to the barrier substrate (30) coated with the protective coating (40), wherein said one or more outside layers (50) is intended to face the exterior of a packaging container (2) formed by the packaging material (10) as the most outer layer.
